# EUROPEAN PATENT SPECIFICATION

(11) **EP 1 660 338 B1**
(45) Date of publication and mention of the grant of the patent: **31.10.2007**
(21) Application number: 04768313.1
(22) Date of filing: 06.09.2004
(51) Int. Cl.: B60H 1/00, B60H 1/26

(54) **VEHICLE AIR CONDITIONING DEVICE**
FAHRZEUGKLIMAANLAGE
DISPOSITIF DE CONDITIONNEMENT D'AIR POUR VEHICULE

(30) Priority: 05.09.2003 GB 0320852
(43) Date of publication of application: 31.05.2006
(73) Proprietor: Creactive Design, Leamington Spa, Warwickshire CV31 1HP (GB)
(72) Inventor: HUME, Tony, Leamington Spa, Warwickshire CV31 1HP (GB)
(74) Representative: Gray, James
(86) International application number: PCT/GB2004/003766
(87) International publication number: WO 2005/023571

(56) References cited:
- DE-A- 4 207 283
- DE-B- 1 680 846
- FR-A- 2 598 493

## Description

The present invention relates to an air conditioning device for a rail vehicle and in particular to an air conditioning device for an interior passenger or operator space of a rail vehicle.

It is known to provide ventilation and climate control arrangements for the interior space of a vehicle. In a simple form, ventilation can be achieved by the provision of an opening to the exterior of the vehicle, which opening allows air outside of the vehicle to be directed to the interior of the vehicle. Typically the provision of ducting enables the movement of the vehicle to force air through the aperture, while a fan may be provided to move air through the opening when the vehicle is stationary.

It will be appreciated that such a system is not suitable in instances where it is desired to keep outside air from entering the interior of the vehicle. In such instances the vehicle may be provided with an internal climate control system where air already within the vehicle interior is moved by the provision of fans and heated or cooled by the use of appropriate heating and cooling means. Such systems are usually complex and include, for example, closed loop evaporation refrigeration systems, electrical heaters and thermostatically controlled operating systems. The systems are typically designed to be incorporated into the vehicle when it is first built and as such their retrofitting to an already built vehicle, or a vehicle not intended at the outset to have such a system, may be difficult if not impossible.

FR 2598493 describes a peltier effect air conditioning system for use in a road vehicle. The duct within which the peltier devices are mounted is arranged transversely to the intended direction of travel of the vehicle. Accordingly, air movement means are required to move air from the exterior of the vehicle over the peltier elements.

According to the present invention there is provided A rail vehicle air conditioning system comprising a duct positioned to receive a through flow of air, an air accumulation space separate from said duct and in fluid communication with an interior space of the vehicle and an electrical heat pump having peltier elements positioned partially in said duct and partially in said air accumulation space, the electrical heat pump being operable to transfer heat energy between said duct and air accumulation space, wherein the air accumulation space is provided with an air movement means operable to move air over the portion of the electrical heat pump located in the air accumulation space, and said duct and air accumulation space are arranged such that air flow through the duct is prevented from communicating with the air accumulation space, characterised in that the duct is positioned to receive the through flow of air as a result of movement of the vehicle, the duct includes a throat having a reduced cross-section, and said the portion of the electrical heat pump positioned in the duct is located at said throat.

The air accumulation space may preferably surround and substantially enclose the portion of the electrical heat pump means provided therein. The accumulation space may comprise an enclosure having an inlet and an outlet. The enclosure may project into an interior space of a vehicle. In such an embodiment the outlet may be provided with a nozzle operable to direct air from said enclosure to said interior space. A plurality of outlets and nozzles may be provided. Alternatively the enclosure may be arranged so as to be in fluid communication with an interior space of a vehicle via a conduit extending between the outlet and an aperture of said interior space.

The peltier elements may preferably have heat sinks or exchangers associated with opposing sides thereof. The electrical heat pump may comprise a plurality of peltier elements and associated heat exchangers.

The duct and air accumulation space may share a common wall. The wall may be provided with an aperture shaped to accommodate the electrical heat pump means.

Embodiments of the present invention will now be described with reference to the accompanying drawings in which:
Figure 1 shows an exploded perspective view of a device according to a first embodiment of the present invention;
Figure 2 shows a perspective view of an assembled device in the cab of a vehicle;
Figure 3 shows an exploded perspective view of a device according to a second embodiment of the present invention; and
Figure 4 shows a diagrammatic view of an alternative embodiment of a device according to the present invention.

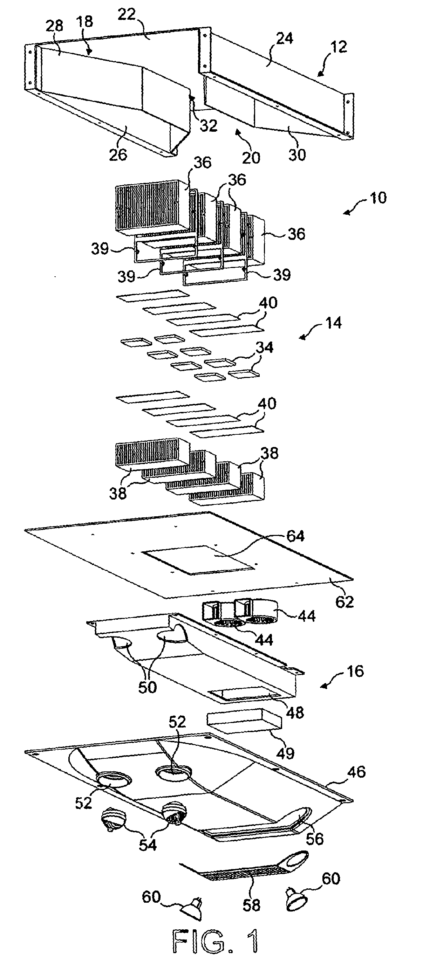

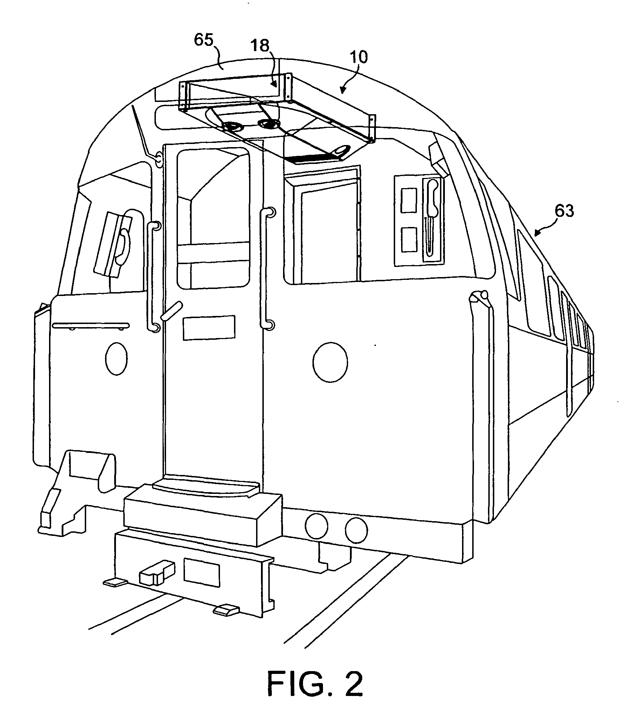

Referring firstly to figures 1 and 2 there is shown a cooling system generally designated 10. The system 10 comprises a duct 12, a heat pump 14 operable to provide a source of cooled air, and a cooled air collection and distribution assembly 16. In the embodiment shown, the system 10 is adapted to be fitted to an upper region of the cab of a rail vehicle 63. The device 10 is positioned such that the duct 12 is aligned with a ventilation opening 65 at the front of the vehicle 63.

The duct 12 may be considered to be open sided and is provided with an inlet 18 and an outlet 20, a base 22 and opposed outer walls 24, 26. The duct 12 further includes a pair of opposed inner walls 28,30 which are arranged to reduce the cross-sectional area of the duct 12 from the inlet 18 to a throat 32, before increasing the cross-sectional area of the duct 12 towards the outlet 20. In the embodiment shown, the inner walls 28, 30 run substantially parallel to one another at the throat 32 so as to provide a throat 32 of constant cross-sectional dimensions over a predetermined distance.

The heat pump 14 comprises a plurality of substantially planar peltier elements 34 having heat exchanger members 36, 38 arranged on opposing sides thereof. Gaskets 39 are provided between the members 36, 38. Intermediate the peltier elements 34 and the exchanger members 36, 38, are positioned thermally conductive pads 40 which serve both to ensure an uninterrupted thermal conduction path between the elements 34 and the exchanger members 36, 38 and to electrically insulate the elements 34 from the members 36,38. The heat exchanger elements 36, 38 are manufactured from aluminium alloy and are provided with a plurality of spaced fins so as to maximise their respective surface areas.

The air collection and distribution assembly 16 comprises an air collection tray 42 defining an air accumulation space having sited therein a pair of fans 44 and a decorative cover 46 which, in use encloses the tray 42. The tray 42 is further provided with an inlet aperture 48 adjacent the respective inlets of the fans 44, and a pair of outlet apertures 50 spaced from the respective outlets of the fans 44. The cover 46 further includes a pair of outlet apertures 52 having movable nozzles 54 located therein and an inlet aperture 56 covered by a grill 58. It will be appreciated that the respective inlet and outlet apertures 48, 50, 52, 56 of the tray 42 and the cover 46 align with one another, in use. A particle filter 49 is provided between the inlets 48,56 to remove airborne particles drawn into the casing panel inlet 56 by the fans. The filter 49 thus prevents particulate matter being drawn through the air accumulation space and ejected through the outlets 50,52. The filter 49 may be periodically replaced by removing the cover 46. The tray 42 may additionally be provided with a sump positioned below the heat exchanger elements 38 to catch any condensate which my form thereon. The sump may advantageously be provided with a drain to permit the removal of condensate from the sump. The grill 58 further includes a pair of lamps 60.

The system 10 additionally includes a divider panel 62 defining a common wall which, in use, separates the duct 12 from the air collection and distribution assembly 16 and prevents the flow of air between the duct 12 and the assembly 16. The panel 62 is provided with an aperture 64 which conforms to the size and shape of the heat pump 14. When the device 10 is assembled, it will be appreciated that the heat pump 14 extends through the aperture 64 such that the heat exchange members 36 of one side are positioned in the throat 32 of the duct 12, while the heat exchange members 38 of the other side project into the air collection tray 42. The one face of the divider panel 62 serves to close the open side of the duct 12 such that air entering the inlet 18 must pass through the throat 32 and hence through the heat exchanger members 36 to reach the outlet 20. The air collection tray 42 is attached to the other face of the divider panel 62 so as to substantially enclose a space into which the remaining heat exchanger members 38 project.

It will be understood that the peltier elements 34, in use, have a "hot" side and a "cold" side. The elements are arranged such that the "hot" side is in contact with the heat exchange members 36 positioned in the duct 12, and the "cold" side is in contact with the heat exchange members 38 positioned in the collection tray 42. It will thus be appreciated that operation of the peltier elements 34 results in cooling of the tray heat exchange members 38 and heating of the duct heat exchange members 36 with the result that heat energy is transferred from the collection tray 42 to the duct 12. The fans 44 are operable to draw air from within the vehicle cab 63 and pass it over the tray heat exchange members 38.

The cooled air is then introduced to the cab 63 by the nozzles 54. Heat accumulated in the duct heat exchange members 36 is dissipated by the flow of air there across resulting from movement of the vehicle. The heat storage capacity of the duct heat exchange members 36 is chosen such that when the vehicle is stationary during normal operating conditions, for example when stopped at a station, the duct heat exchange members 36 do not exceed a predetermined temperature. The heat pump 14 is provided with a thermostatically controlled operation system which deactivates the peltier elements in the event that the duct heat exchange members 36 approach a predetermined cut-off temperature. Such a situation may occur when the vehicle remains stationary for a prolonged period of time.

In the embodiment shown in figures 1 and 2 the device 10 is configured so as to be a self contained unit that can be readily retrofitted to a vehicle. The size and shape of the duct 12 is configured to match that of a ventilation conduit provided in a rail vehicle. The device 10 may thus be readily fitted to a vehicle by removing an appropriate length of the existing duct and fitting the device 10 in its place. The necessary power connections to operate the peltier elements 34, fans 44 and lamps 60 may be made to the existing electrical system of the vehicle.

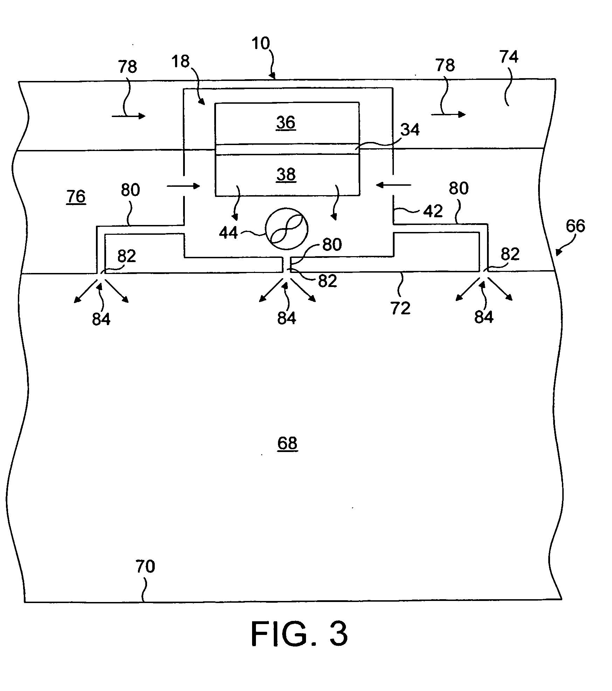

Referring now to figure 3 there is shown an alternative embodiment of a cooling system, generally designated 90, according to the present invention. Features common to the embodiment of figures 1 and 2 are identified with like reference numerals. The device 90 differs from the device 10 of figures 1 and 2 in a number of respects described below. Firstly, the divider panel 62 is provided with a plurality of apertures 64 rather than a single aperture. Each aperture 64 is sized to receive therein a peltier element 34, however the aperture is smaller than the heat exchanger members 36,38 which contact each side of the peltier element 34. It will thus be appreciated that the heat exchanger members 36,38 rest on the divider panel 62 and sandwich the peltier element 34 received in the aperture. The solid gaskets 39 of the embodiment of figures 1 and 2 are omitted and in their place a wet silicon sealer is employed between the heat exchanger members 36,38 and the divider panel 62. Optionally, the thermally conductive pads 40 may be replaces with a thermally conductive grease applied to and surrounding the peltier elements 34.

The duct 12 differs in that it is of a single wall construction rather than a twin wall construction. The air collection tray 42 is of a two piece construction comprising a fore portion 92 and an aft portion 94. The fore portion 92 includes a sump 96 having a drain tube 98 and a pair of air collection cavities 100. The aft portion 94 includes the inlet aperture 48 which is shrouded by a conduit 102 extending between the collection tray aperture 48 and the casing panel inlet aperture 56. The conduit 102 is arranged to receive and retain the particle filter 49 and grill 58, while the fans 44 are mounted in the aft portion 94 over the inlet aperture 48.

The sump 96 is provided to receive any condensate which may drip form the lower heat exchanger members 38, for example during periods of high humidity. The sump 96 is positioned in the fore portion 92 so as not to be below the lower heat exchanger members 38 but is provided adjacent and upstream the edge of the heat exchanger members 38 closest the duct inlet 18. The term upstream is construed with reference to the flow through the duct 12. The base 104 of the tray fore portion 92 may be inclined towards the sump 96 so as to convey condensate thereto. The positioning of the sump 96 intermediate the base 104 and collection cavities 100 so as to prevent condensate reaching the cavities 100. Each air collection cavity 100 is provided with an aperture 106 connectable to a conduit 108 extending to a nozzle 54. The air collection tray 42 is provided in two portions 92,94 so as to enable the aft portion 94, including the fans 44 and filter 49 to be removed from the system 90 without the need to remove the entire air collection tray 42. The aft portion 94 may need to be removed so as to service or replace the fans 44 and/or filter 49.

The system 90 is further provided with control box and user interface 110 which projects through an aperture 112 of the cover 46. The user interface permits user to control certain aspects of the operation of the device 90, for example the speed of the fans 44. The cover 46 is shaped so as define a space 114 between the interior surface thereof and the underside of the air collection tray 52 within which an electronics enclosure 116 is located. The enclosure 116 houses the power and control electronics for the peltier elements 34 and fans 44.

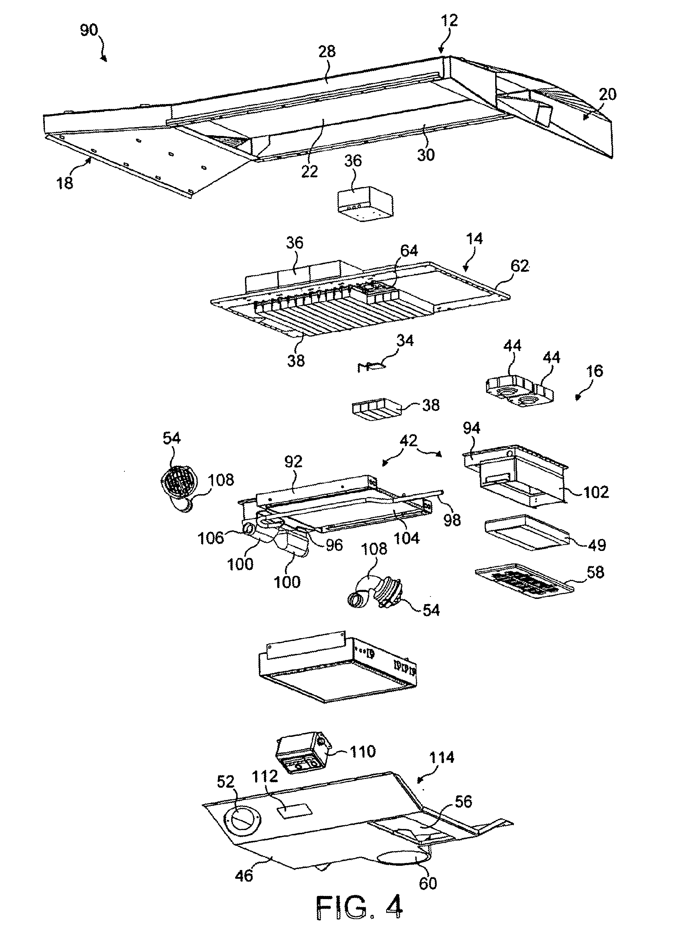

Referring now to figure 4 there is shown an alternative embodiment of the present invention. Components common to the embodiment of figures 1 to 3 are identified with like reference numerals. While the embodiment of figures 1 to 3 is adapted for use in a vehicle cab, the embodiment of figure 3 is adapted for use in a passenger carriage 66. The carriage 66 comprises a passenger accommodation space 68 having a floor 70 and a ceiling 72. A ventilation duct 74 is provided in an upper portion of the carriage and a space 76 is provided between the duct 74 and the ceiling 72. The duct 74 is arranged such that air is caused to move therethrough, indicated by arrows 78, when the carriage 66 is moving. The collection tray 42 of the device 10 is provided with a plurality of conduits 80 which connect the tray 42 to nozzles 82 in the ceiling 72. In the embodiment shown the nozzles 82 are provided with diffusers 84. In use, the device is operable to cool air present in the space 76 and deliver it to the passenger accommodation space 68.

The present invention provides a compact air conditioning system which utilises the cooling effect of moving air resulting from movement of a vehicle yet prevents the passage of said air to the interior of the vehicle. While the above referenced embodiments refer to the provision of cooled air to an interior space of a vehicle, it will be appreciated that the peltier elements may be operated in reverse so as to provide a source of warm air. While the above described embodiments prevent the transmission of air from the duct to the tray, provision may be made elsewhere in the vehicle ventilation system to introduce outside air to the interior of the vehicle. Such air may be mixed with the air heated or cooled within the tray.

## Claims

1. A rail vehicle air conditioning system (10,90) comprising a duct (12) positioned to receive a through flow of air, an air accumulation space separate from said duct (12) and in fluid communication with an interior space of the vehicle and an electrical heat pump (14) having peltier elements (34) positioned partially in said duct (12) and partially in said air accumulation space, the electrical heat pump (14) being operable to transfer heat energy between said duct (12) and air accumulation space, wherein the air accumulation space is provided with an air movement means (44) operable to move air over the portion of the electrical heat pump (14) located in the air accumulation space, and said duct (12) and air accumulation space are arranged such that air flow through the duct (12) is prevented from communicating with the air accumulation space, **characterised in that** the duct (12) is positioned to receive the through flow of air as a result of movement of the vehicle, the duct includes a throat (32) having a reduced cross-section, and said the portion of the electrical heat pump (14) positioned in the duct (12) is located at said throat (32).

2. A system (10,90) as claimed in claim 1 wherein the air accumulation space surrounds the portion of the electrical heat pump (14) located therein.

3. A system (10,90) as claimed in claim 2 wherein the air accumulation space substantially encloses the portion of the electrical heat pump (14) means located therein.

4. A system (10,90) as claimed claim 2 or claim 3 wherein the accumulation space is defined by an enclosure (42) having an inlet and an outlet (48,50).

5. A system (10,90) as claimed in claim 4 wherein the enclosure (42) projects into the interior space of a vehicle.

6. A system (10,90) as claimed in claim 4 or claim 5 wherein the enclosure (42) comprises a fore portion (92) having one of the inlet and outlet (48,50) and an aft portion (94) having the other of the inlet and outlet (48,50), wherein the fore and aft portions (92,94) are separable from one another.

7. A system (10,90) as claimed in claim 6 wherein the portion of the enclosure (42) having the inlet (48) is removable from the air accumulation space.

8. A system (10,90) as claimed in any of claims 4 to 7 wherein the enclosure (42) is received within a cover (40), the cover (40) having apertures (52,56) aligned with the enclosure inlet and outlet (48,50).

9. A system (10,90) as claimed in claim 8 wherein the cover (46) is provided with lamps (60) operable to illuminate the interior space.

10. A system (10,90) as claimed in any of claims 4 to 9 wherein the outlet (52) is provided with a nozzle (54) operable to direct air from the air accumulation space to the interior space.

11. A system (10,90) as claimed in claim 4 wherein the enclosure (42) is arranged so as to be in fluid communication with an interior space of a vehicle via a conduit (108) extending between the outlet (50) and an aperture in a wall of said interior space.

12. A system (10,90) as claimed in claim 11 wherein the aperture is provided with a nozzle (54) operable to direct air from the conduit (108) to the interior space.

13. A system (10,90) as claimed in any preceding claim wherein the air movement means (44) comprise a fan mounted to the enclosure.

14. A system (10,90) as claimed in any of claims 4 to 13 wherein the inlet (48) is provided with a particle filter (49).

15. A system (10,90) as claimed in claim 14 wherein the filter (49) is removable.

16. A system (10,90) as claimed in any of claims 4 to 15 wherein the enclosure (42) includes a sump (96) positioned to receive condensate from the portion if the electrical heat pump (14) located within the air accumulation space.

17. A system (10,90) as claimed in claim 16 wherein the sump (90) is provided with a drain to convey condensate from the sump (90).

18. A system (10,90) as claimed in any preceding claim wherein the peltier elements (34) have heat sinks or exchangers (36,38) associated with opposing sides thereof.

19. A system (10,90) as claimed in claim 18 wherein the electrical heat pump (14) comprises a plurality of peltier elements (34) and associated heat exchangers (36,38).

20. A system (10,90) as claimed in claim 18 or claim 19 wherein the opposing heat exchangers (36,38) project into the duct (12) and air accumulation space respectively.

21. A system (10,90) as described in any preceding claim wherein the duct (12) and air accumulation space share a common wall (62).

22. A system (10,90) as claimed in claim 21 wherein the common wall (62) includes an aperture (64) shaped to accommodate the electrical heat pump (14) therein.

## Patentansprüche

1. Klimaanlage (10, 90) für Schienenfahrzeuge, die einen zur Aufnahme eines Luftstroms angeordneten Kanal (12), einen vom Kanal (12) getrennten Luftsammelraum in Strömungsverbindung mit einem Fahrzeuginnenraum und eine elektrische Wärmepumpe (14) mit Peltier-Elementen aufweist, die sich teilweise im Kanal (12) und teilweise im Luftsammelraum befinden, wobei mit der elektrischen Wärmepumpe (14) betrieblich Wärmeenergie zwischen dem Kanal (12) und dem Luftsammelraum übertragbar ist und letzterer mit einer Luftbewegungseinrichtung (44) versehen ist, mit der betrieblich Luft über den im Luftsammelraum befindlichen Teil der elektrischen Wärmepumpe (14) führbar ist, wobei der Kanal (12) und der Luftsammelraum so angeordnet sind, dass der Luftstrom im Kanal (12) nicht mit dem Luftsammelraum in Verbindung treten kann, **dadurch gekennzeichnet, dass** der Kanal (12) zur Aufnahme des von der Fahrzeugbewegung verursachten Luftdurchstroms angeordnet ist und eine Drosselstelle (32) verringerten Querschnitts enthält, wobei der im Kanal (12) befindliche Teil der elektrischen wärmepumpe (14) in der Drosselstelle (32) angeordnet ist.

2. System (10, 90) nach Anspruch 1, bei dem der Luftsammelraum den in ihm angeordneten Teil der elektrischen Wärmepumpe (14) umgibt.

3. System (10, 90) nach Anspruch 2, bei dem der Luftsammelraum den in ihm angeordneten Teil der elektrischen Wärmepumpe (14) im Wesentlichen einschließt.

4. System (10, 90) nach Anspruch 2 oder 3, bei dem der sammelraum von einer Umkleidung (42) mit einem Ein- und einem Auslass (48, 50) umschlossen ist.

5. System (10, 90) nach Anspruch 4, bei dem die Umkleidung (42) in den Innenraum eines Fahrzeugs ragt.

6. System (10, 90) nach Anspruch 4 oder 5, bei dem die Umkleidung (42) einen vorderen Teil (92) mit entweder dem Ein- oder dem Auslass (48, 50) sowie einen hinteren Teil (94) mit dem Aus- bzw. dem Einlass (50, 48) aufweist, wobei der vordere und der hintere Teil (92, 94) voneinander trennbar sind.

7. System (10, 90) nach Anspruch 6, bei dem der den Einlass (48) aufweisende Teil der Umkleidung (42) vom Luftsammelraum abnehmbar ist.

8. System (10, 90) nach einem der Ansprüche 4 bis 7, bei dem die Umkleidung (42) in einer Abdeckung (40) enthalten ist, die Öffnungen (52, 56) aufweist, die auf den Ein- und den Auslass (48, 50) der Umkleidung ausgerichtet sind.

9. System (10, 90) nach Anspruch 8, bei dem die Abdeckung (46) mit Leuchten (60) versehen ist, die betrieblich den Innenraum beleuchten.

10. System (10, 90) nach Anspruch 4 bis 9, bei dem der Auslass (52) mit einer Düse (54) versehen ist, mit der betrieblich Luft aus dem Luftsammelraum in den Innenraum richtbar ist.

11. System (10, 90) nach Anspruch 4, bei dem die Umkleidung (42) über einen Kanal (108), der zwischen dem Auslass (50) und einer Öffnung in einer Wand eines Innenraums verläuft, in Strömungsverbindung mit dein Innenraum steht.

12. System (10, 90) nach Anspruch 11, bei dem die Öffnung mit einer Düse (54) versehen ist, mit der betrieblich Luft aus dem Kanal (108) in den Innenraum richtbar ist.

13. System (10, 90) nach einem der vorgehenden Ansprüche, bei dem die Luftbewegungseinrichtung (44) einen an der Umkleidung montiertes Gebläse aufweist.

14. System (10, 90) nach einem der Ansprüche 4 bis 13, bei dem der Einlass (48) mit einem Teilchenfilter (49) versehen ist.

15. System (10, 90) nach Anspruch 14, bei dem das Filter (49) herausnehmbar ist.

16. System (10, 90) nach einem der Ansprüche 4 bis 15, bei dem die Umkleidung (42) einen Sumpf (96) aufweist, der aus dem im Luftsammelraum befindlichen Teil der elektrischen Wärmepumpe (14) Kondensat aufnehmen kann.

17. System (10, 90) nach Anspruch 16, bei dem der Sumpf (90) einen Ablass aufweist, mit dem Kondensat aus dem Sumpf (90) ableitbar ist.

18. System (10, 90) nach einem der vorgehenden Ansprüche, bei dem den Peltier-Elementen (34) auf ihren voneinander abgewandten Seiten Wärmesenken bzw. Wärmetauscher (36, 38) zugeordnet sind.

19. System (10, 90) nach Anspruch 18, bei dem die elektrische Wärmepumpe (14) eine Vielzahl von Peltier-Elementen (34) und der zugeordneten Wärmetauschern (36, 38) aufweist.

20. System (10, 90) nach Anspruch 18 oder 19, bei dem die voneinander abgewandten Wärmetauscher (36, 38) in den Kanal (12) bzw. in den Luftsammelraum ragen.

21. System (10, 90) nach einem der vorgehenden Ansprüche, bei dem dem Kanal (12) und dem Luftsammelraum eine Wand (62) gemeinsam ist.

22. System (10, 90) nach Anspruch 21, bei dem die Wand (62) eine Öffnung (64) enthält, die zur Aufnahme der elektrischen Wärmepumpe (14) gestaltet ist.

## Revendications

1. Système de conditionnement d'air (10,90) pour véhicule ferroviaire comprenant un conduit (12) placé pour recevoir un flux d'air traversant, un espace d'accumulation d'air séparé de ce conduit (12) et en communication fluidique avec un espace intérieur de ce véhicule et une pompe électrique à chaleur (14) comportant des composants (34) à effet Peletier située partiellement dans ce conduit (12) et partiellement dans cet espace d'accumulation d'air, la pompe à chaleur (14) ayant pour fonction de transférer l'énergie calorifique entre ce conduit (12) et l'espace d'accumulation d'air dans lequel l'espace d'accumulation d'air comporte un moyen (44) de mise en mouvement de l'air fonctionnant pour déplacer l'air au-dessus de la zone de la pompe électrique à chaleur (14) située dans l'espace d'accumulation d'air, ce conduit (12) et cet espace d'accumulation d'air étant agencés de façon que le flux d'air le long du conduit (12) ne puisse pas communiquer avec l'espace d'accumulation d'air **caractérisé en ce que** le conduit (12) est placé pour recevoir le flux d'air traversant résultant du mouvement du véhicule, **en ce que** le conduit présente un étranglement (31) à zone de section réduite et **en ce que** la partie de la pompe électrique à chaleur (14) placée dans le conduit (12) est située à cet étranglement (32).

2. Système (10,90) selon la revendication 1 dans lequel l'espace d'accumulation d'air entoure la partie de la pompe électrique à chaleur (14) qui est située à l'intérieur.

3. Système (10,90) selon la revendication 2 dans lequel l'espace d'accumulation d'air enferme sensiblement la zone de la pompe électrique à chaleur (14) située à l'intérieur.

4. Système (10,90) selon la revendication 2 ou 3 dans lequel l'espace d'accumulation d'air est délimité par une enceinte (42) comportant une entrée et une sortie (48,50).

5. Système (10,90) selon la revendication 4 dans lequel l'enceinte (42) fait saillie dans l'espace intérieur du véhicule.

6. Système (10,90) selon la revendication 4 ou 5 dans lequel l'enceinte (42) comprend une partie avant (92) possédant une des entrée et sortie (48,50) et une partie arrière (94) possédant l'autre des entrée et sortie (48,50), et dans lequel les parties avant et arrière (92,94) sont séparables l'une de l'autre.

7. Système (10,90) selon la revendication 6 dans lequel la partie de l'enceinte qui possède l'entrée (48) est amovible de l'espace d'accumulation d'air.

8. Système (10,90) selon l'une quelconque des revendications 4 à 7 dans lequel l'enceinte (42) est logée dans un capot (46), ce capot (46) présentant des ouvertures (52,56) alignées avec l'entrée et la sortie (48,50) de l'enceinte.

9. Système (10,90) selon la revendication 8 dans lequel le capot (46) est équipé de lampes (60) dont la fonction est d'éclairer l'espace intérieur.

10. Système (10,90) selon l'une quelconque des revendications 4 à 9 dans lequel la sortie (52) est pourvue d'une buse (54) dont la fonction est de diriger l'air de l'espace d'accumulation d'air vers l'espace intérieur.

11. Système (10,90) selon la revendication 4 dans lequel l'enceinte (42) est agencée pour se trouver en communication fluidique avec un espace intérieur d'un véhicule par un conduit (108) s'étendant entre la sortie (50) et une ouverture dans une paroi de cet espace intérieur.

12. Système (10,90) selon la revendication 11 dans lequel l'ouverture est pourvue d'une buse (54) dont la fonction est de diriger l'air du conduit (108) vers l'espace intérieur.

13. Système (10,90) selon l'une quelconque des revendications précédentes dans lequel le moyen de mise en mouvement de l'air (44) comprend un ventilateur monté sur l'enceinte.

14. Système (10,90) selon l'une quelconque des revendications 4 à 13 dans lequel l'entrée (48) est pourvue d'un filtre à particules (49).

15. Système (10,90) selon la revendication 14 dans lequel le filtre (49) est amovible.

16. Système (10,90) selon l'une quelconque des revendications 4 à 15 dans lequel l'enceinte (42) comprend un collecteur (96) placé pour recevoir les condensats de la partie de la pompe électrique à chaleur (14) située à l'intérieur de l'espace d'accumulation d'air.

17. Système (10,90) selon la revendication 16 dans lequel le collecteur (96) comporte un drain pour évacuer les condensats du collecteur (96).

18. Système (10,90) selon l'une quelconque des revendications précédentes dans lequel les composants (34) à effet Peletier possèdent des échangeurs de chaleur ou des dissipateurs thermiques (36,38) associés à leurs faces opposées.

19. Système (10,90) selon la revendication 18 dans lequel la pompe électrique à chaleur (14) comprend une pluralité de composants à effet Peletier (34) et les échangeurs associés (36,38).

20. Système (10,90) selon la revendication 18 et 19 dans lequel les échangeurs de chaleur opposés (36,38) font saillie respectivement à l'intérieur du conduit (12) et de l'espace d'accumulation d'air.

21. Système (10,90) tel que décrit dans l'une quelconque des revendications précédentes dans lequel le conduit (12) et l'espace d'accumulation d'air se partagent une paroi commune (62).

22. Système (10,90) selon la revendication 21 dans lequel la paroi commune (62) présente une ouverture(64) conformée pour y loger la pompe électrique à chaleur (14).
